# EUROPEAN PATENT APPLICATION

(11) **EP 4 851 332 A1**
(43) Date of publication of application: **09.12.2026**
(21) Application number: 25761017.0
(22) Date of filing: 25.02.2025
(51) Int. Cl.: C25B 1/01, C01B 32/50, C25B 1/02, C25B 1/26, C25B 3/26, C25B 9/23

(54) **APPARATUS FOR PRODUCING CARBON DIOXIDE**

(30) Priority: 01.03.2024 JP 2024031710
(71) Applicant: GS Yuasa International Ltd., Kisshoin, Minami-ku, Kyoto-shi, Kyoto 601-8520 (JP)
(72) Inventor: MIZUNO, Masaki, Kyoto-shi, Kyoto 601-8520 (JP); NISHIYAMA, Hiromichi, Kyoto-shi, Kyoto 601-8520 (JP)
(74) Representative: Isarpatent
(86) International application number: PCT/JP2025/006435
(87) International publication number: WO 2025/182936

(57) **Abstract**

A carbon dioxide production apparatus includes: an anode disposed on one side of an electrolyte membrane and configured to generate protons from hydrogen; a cathode disposed on an other side of the electrolyte membrane and configured to generate hydrogen; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution, wherein the anode is configured to be supplied with a gas comprising a hydrogen concentration of less than 99 vol%.

## Description

### TECHNICAL FIELD

The present invention relates to a carbon dioxide production apparatus, a carbon compound production system, a carbon dioxide production method, and a carbon dioxide concentration method.

### BACKGROUND ART

An increase in emissions of greenhouse gases such as carbon dioxide has been cited as one cause of global warming. Toward the reduction of carbon dioxide emissions, development of technologies for separating and concentrating carbon dioxide from exhaust gas and the atmosphere is underway.

A carbon dioxide recovery, desorption, and concentration apparatus disclosed in Patent Literature 1 concentrates carbon dioxide by continuously performing recovery of carbon dioxide from a carbon dioxide-containing gas into an electrolyte solution using a water splitting reaction and desorption of the recovered carbon dioxide from the electrolyte solution.

### CITATION LIST

### Patent Literature

Patent Literature 1: Japanese Unexamined Patent Application Publication No. 2023-125258

### DISCLOSURE OF INVENTION

### PROBLEMS TO BE SOLVED BY THE INVENTION

The technology described in Patent Literature 1 requires a large amount of electric energy to electrolyze water.

An object of the present disclosure is to provide a technology capable of reducing energy consumption in the production of carbon dioxide.

### MEANS FOR SOLVING THE PROBLEMS

A carbon dioxide production apparatus according to one aspect of the present disclosure includes: an electrolyte membrane; an anode disposed on one side of the electrolyte membrane and configured to generate protons from hydrogen; a cathode disposed on an other side of the electrolyte membrane and configured to generate hydrogen; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution, wherein the anode is configured to be supplied with a gas comprising a hydrogen concentration of less than 99 vol%.

A carbon dioxide production apparatus according to another aspect of the present disclosure includes: an anode configured to generate protons from hydrogen; a cathode configured to generate hydrogen; a first liquid chamber configured to be supplied with a first electrolyte solution having absorbed carbon dioxide; a second liquid chamber configured to be supplied with a second electrolyte solution; and an electrolyte membrane disposed between the first liquid chamber and the second liquid chamber, wherein the anode is configured to be supplied with a gas comprising a hydrogen concentration of less than 99 vol%.

A carbon dioxide production apparatus according to one aspect of the present disclosure includes: an electrolyte membrane; an anode disposed on one side of the electrolyte membrane and configured to generate protons from hydrogen; a cathode disposed on an other side of the electrolyte membrane and configured to generate hydrogen; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution, wherein the anode is configured to be supplied with a mixed gas containing hydrogen and a carbon compound.

### EFFECT OF THE INVENTION

According to the present disclosure, energy consumption in the production of carbon dioxide can be reduced.

### BRIEF DESCRIPTION OF DRAWINGS

FIG. 1 is a schematic diagram of a carbon compound production system.
FIG. 2 is a cross-sectional view illustrating a configuration example of a concentration and separation unit.
FIG. 3 is an explanatory diagram for explaining the operation of a concentration and separation apparatus.

### DESCRIPTION OF EMBODIMENTS

(1) A carbon dioxide production apparatus according to one aspect of the present disclosure includes: an electrolyte membrane; an anode disposed on one side of the electrolyte membrane and configured to generate protons from hydrogen; a cathode disposed on an other side of the electrolyte membrane and configured to generate hydrogen from protons; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution, wherein the anode is configured to be supplied with a gas comprising a hydrogen concentration of less than 99 vol%.

A carbon dioxide production apparatus according to another aspect of the present disclosure includes: an electrolyte membrane; an anode disposed on one side of the electrolyte membrane and configured to generate protons from hydrogen; a cathode disposed on an other side of the electrolyte membrane and configured to generate hydrogen; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution, wherein the anode is configured to be supplied with a gas comprising a hydrogen concentration of less than 99 vol%. Examples of the cathode configured to generate hydrogen include a cathode configured to generate hydrogen from protons and a cathode configured to generate hydrogen from water.

(2) A carbon dioxide production apparatus according to one aspect of the present disclosure includes: an anode configured to generate protons from hydrogen; a cathode configured to generate hydrogen; a first liquid chamber configured to be supplied with a first electrolyte solution having absorbed carbon dioxide; a second liquid chamber configured to be supplied with a second electrolyte solution; and an electrolyte membrane disposed between the first liquid chamber and the second liquid chamber, wherein the anode is configured to be supplied with a gas comprising a hydrogen concentration of less than 99 vol%. The cathode may be a cathode configured to generate hydrogen from protons.

The present inventors have studied the practical application of a carbon dioxide production apparatus using hydrogen pumping. In conventional technologies utilizing the principle of hydrogen pumping, high-purity hydrogen gas has been used as a hydrogen source (hereinafter also referred to as a hydrogen raw material) for pumping hydrogen. Because disadvantages such as a decrease in reaction efficiency are expected when the hydrogen concentration in the hydrogen gas is lowered, no attempts have been made to reduce the purity of hydrogen. "Pumping hydrogen" means hydrogen used for the principle of hydrogen pumping. In the course of their own studies, the present inventors have newly conceived the idea of utilizing low-purity hydrogen gas as a hydrogen raw material, and as a result of intensive studies, have found that a gas comprising a hydrogen concentration of less than 99 vol% can be used as a hydrogen raw material. This situation will be described in detail below.

Conventional technologies utilizing the principle of hydrogen pumping include an apparatus (hereinafter also referred to as a hydrogen gas pressure booster) that converts low-pressure hydrogen gas into high-pressure hydrogen gas using the principle of hydrogen pumping. In this apparatus, low-pressure hydrogen gas is used as a hydrogen raw material. As a mode of use of this apparatus, rather than being used alone, the apparatus is often used in combination with a hydrogen gas production apparatus, in such a manner that low-pressure hydrogen gas produced by the hydrogen gas production apparatus is supplied to the hydrogen gas pressure booster and converted into high-pressure hydrogen gas. Some hydrogen gas production apparatuses produce hydrogen gas by steam reforming a raw material such as methane or LPG, and the high-purity gas produced by such an apparatus achieves a quality of hydrogen concentration of not less than 99 vol%, with only extremely trace amounts of nitrogen, carbon monoxide, or carbon dioxide present as unavoidable impurities even if components other than hydrogen are contained. Under circumstances where the apparatus is used in combination with an apparatus that produces high-purity hydrogen gas in this manner, no one other than the present inventors could have had a motivation to lower the purity of the hydrogen gas supplied to the hydrogen gas pressure booster. As described above, conventional technologies utilizing the principle of hydrogen pumping include an apparatus that converts low-pressure hydrogen gas into high-pressure hydrogen gas using the principle of hydrogen pumping; however, this apparatus is generally used in combination with a hydrogen gas production apparatus that produces high-purity hydrogen gas, and it can be said that, at the present time, the concept of lowering the purity of gas serving as a hydrogen raw material could not have been conceived of by anyone other than the present inventors.

Furthermore, regarding a carbon dioxide production apparatus utilizing the principle of hydrogen pumping, because high-purity hydrogen gas is generated at the cathode simultaneously with the generation of carbon dioxide, it can be said that no one other than the present inventors could have had difficulty conceiving of lowering the purity of hydrogen gas supplied to the anode side as a hydrogen raw material. This is because the high-purity hydrogen gas generated at the cathode can be reused as a hydrogen source to be supplied to the anode, and there is an option to circulate and reuse this high-purity hydrogen gas. Since this option is rational from the viewpoint of reducing raw material costs, the option of separately purchasing or otherwise obtaining new hydrogen and supplying it as a hydrogen raw material is unlikely to be considered, and the option of supplying low-purity hydrogen gas faces an even higher hurdle for consideration.

In studying the practical application of a carbon dioxide production apparatus using hydrogen pumping, the present inventors have focused on an embodiment in which this apparatus is used in combination with an electrolyzer for reducing carbon dioxide. Then, in the process of developing a carbon compound production system combining these apparatuses, the present inventors newly conceived of using low-purity hydrogen gas as a hydrogen source for hydrogen pumping despite the background described above. This concept originates from the fact that gas generated in the electrolyzer contains low-concentration hydrogen due to an unavoidable side reaction that occurs in parallel when reducing carbon dioxide. In the course of advancing studies on the handling of this gas containing low-concentration hydrogen, the present inventors attempted to use this gas as a hydrogen raw material for a carbon dioxide production apparatus, and through this attempt, found that a predetermined problem can be solved by using a gas comprising a hydrogen concentration of less than 99 vol% as a hydrogen raw material.

According to the carbon dioxide production apparatus described in (1) or (2) above, carbon dioxide gas can be produced using an electrodialysis method by hydrogen pumping in which a gas comprising a hydrogen concentration of less than 99 vol% is used. For example, the voltage applied to the carbon dioxide production apparatus can be made lower than that in a method using water electrolysis, and energy consumption can be reduced. Furthermore, since a gas comprising a hydrogen concentration of less than 99 vol% is used as the hydrogen raw material, the degree of freedom in selecting the hydrogen raw material increases, and the degree of freedom in system design increases.

(3) In the carbon dioxide production apparatus described in (1) or (2) above, the gas supplied to the anode may have a hydrogen concentration of not more than 50 vol%.

According to the carbon dioxide production apparatus described in (3) above, the degree of freedom in selecting the hydrogen raw material is further increased.

(4) In the carbon dioxide production apparatus described in any of (1) to (3) above, the gas supplied to the anode may include a mixed gas containing hydrogen and a carbon compound, the mixed gas being obtained by reducing carbon dioxide produced by the carbon dioxide production apparatus.

According to the carbon dioxide production apparatus described in (4) above, hydrogen in a mixed gas derived from carbon dioxide gas produced by the carbon dioxide production apparatus can be used as pumping hydrogen, so that gas can be efficiently cycled within the system.

(5) In the carbon dioxide production apparatus described in any one of (1) to (4) above, the gas supplied to the anode may be mixed with a gas comprising a hydrogen concentration of not less than 99 vol%.

According to the carbon dioxide production apparatus described in (5) above, by further including a gas comprising a hydrogen concentration of not less than 99 vol% in the hydrogen raw material, the hydrogen concentration of the hydrogen raw material can be increased, so that the production rate of carbon dioxide produced by the carbon dioxide production apparatus increases. The production rate of the mixed gas derived from the carbon dioxide gas produced by the carbon dioxide production apparatus increases, and the operating efficiency of the entire system improves.

(6) In the carbon dioxide production apparatus described in (5) above, the gas comprising a hydrogen concentration of not less than 99 vol% may include hydrogen generated by the cathode.

According to the carbon dioxide production apparatus described in (6) above, hydrogen gas obtained by the carbon dioxide production apparatus can be used as a hydrogen raw material, so that gas can be efficiently cycled within the system.

(7) The carbon dioxide production apparatus described in any one of (1) to (6) above may include a merging unit configured to merge a gas comprising a hydrogen concentration of less than 99 vol% with a gas comprising a hydrogen concentration of not less than 99 vol% and supply the gases to the anode.

According to the carbon dioxide production apparatus described in (7) above, gases comprising different hydrogen concentrations can be merged, so that the hydrogen concentration of the hydrogen raw material can be appropriately adjusted.

(8) The carbon dioxide production apparatus described in any one of (1) to (7) above may include a gas-liquid separator configured to separate carbon dioxide released from the first electrolyte solution and the first electrolyte solution from each other.

According to the carbon dioxide production apparatus described in (8) above, carbon dioxide and the first electrolyte solution can be appropriately separated.

(9) In the carbon dioxide production apparatus described in (8) above, the first electrolyte solution separated by the gas-liquid separator may be supplied to the second liquid chamber as the second electrolyte solution.

According to the carbon dioxide production apparatus described in (9) above, since the first electrolyte solution can be regenerated and cyclically used, the amount of energy required for absorbing and releasing carbon dioxide can be reduced, and the operating efficiency can be improved.

(10) The carbon dioxide production apparatus described in any one of (1) to (9) above may include a first gas chamber configured to allow the gas supplied to the anode to flow therethrough, and the first gas chamber may include a discharge port configured to discharge a part of the gas supplied to the anode.

According to the carbon dioxide production apparatus described in (10) above, among components contained in the raw material gas, unreacted components that remain without being used in the reaction at the anode can be discharged. Even when the raw material gas contains components other than hydrogen, it is possible to prevent the unreacted components from accumulating in the carbon dioxide production apparatus.

(11) The carbon dioxide production apparatus described in any one of (1) to (10) above may include a recovery unit configured to recover the gas discharged from the discharge port.

According to the carbon dioxide production apparatus described in (11) above, the unreacted components contained in the raw material gas can be recovered. By supplying a gas containing hydrogen and a specific component other than hydrogen to the anode and recovering the component other than hydrogen as an exhaust gas, hydrogen can be separated from the gas.

(12) The carbon dioxide production apparatus described in any one of (1) to (11) above may include a gas-liquid contact section configured to bring a gas containing carbon dioxide into contact with a liquid, wherein the first liquid chamber may be configured to be supplied with the first electrolyte solution having absorbed carbon dioxide by bringing the gas containing carbon dioxide into contact with the liquid in the gas-liquid contact section.

According to the carbon dioxide production apparatus described in (12) above, it can function as a concentrated carbon dioxide production apparatus that produces high-concentration carbon dioxide from low-concentration carbon dioxide.

(13) The carbon dioxide production apparatus described in any one of (1) to (4) above may include a plurality of units between the anode and the cathode, each unit having: the electrolyte membrane; and the first liquid chamber and the second liquid chamber disposed with the electrolyte membrane interposed therebetween, wherein the plurality of first liquid chambers may each be connected to a gas-liquid separator configured to separate carbon dioxide released from the first electrolyte solution and the first electrolyte solution from each other, and to a supply path configured to supply the first electrolyte solution.

According to the carbon dioxide production apparatus described in (13) above, by providing a plurality of stacked electrolyte units, equivalent carbon dioxide gas production performance can be achieved with a compact apparatus, as compared with a case where a plurality of carbon dioxide production apparatuses each having a single electrolyte unit are prepared and operated. A gas-liquid mixture from each first liquid chamber can be reliably separated by the gas-liquid separator, and the first electrolyte solution can be reliably supplied to each first liquid chamber.

(14) The carbon dioxide production apparatus described in any one of (1) to (4) above includes: a first gas chamber configured to allow the gas supplied to the anode to flow therethrough; and a second gas chamber configured to allow hydrogen generated by the cathode to flow therethrough, wherein a flow rate of gas per unit time in the first gas chamber may be larger than a flow rate of gas per unit time in the second gas chamber.

According to the carbon dioxide production apparatus described in (14) above, even when a gas comprising a hydrogen concentration of less than 99 vol% is used, a sufficient amount of gas can be supplied to the anode, so that an insufficient oxidation reaction of hydrogen can be suppressed.

(15) A carbon dioxide production apparatus according to one aspect of the present disclosure includes: an electrolyte membrane; an anode disposed on one side of the electrolyte membrane and configured to generate protons from hydrogen; a cathode disposed on an other side of the electrolyte membrane and configured to generate hydrogen from protons; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution, wherein the anode is configured to be supplied with a mixed gas containing hydrogen and a carbon compound, the mixed gas being obtained by reducing carbon dioxide produced by the apparatus itself.

Instead of the cathode configured to generate hydrogen from protons, the cathode may be a cathode configured to generate hydrogen. Instead of a mixed gas containing hydrogen and a carbon compound, the mixed gas being obtained by reducing carbon dioxide produced by the apparatus itself, the mixed gas may be a mixed gas containing hydrogen and a carbon compound, or a mixed gas containing hydrogen and a carbon compound, the mixed gas being obtained by reducing carbon dioxide.

A carbon dioxide production apparatus according to another aspect of the present disclosure includes: an anode configured to generate protons from hydrogen; a cathode configured to generate hydrogen; a first liquid chamber configured to be supplied with a first electrolyte solution having absorbed carbon dioxide; a second liquid chamber configured to be supplied with a second electrolyte solution; and an electrolyte membrane disposed between the first liquid chamber and the second liquid chamber, wherein the anode is configured to be supplied with a mixed gas containing hydrogen and a carbon compound. The cathode may be a cathode configured to be generate hydrogen from protons. The mixed gas may be a mixed gas containing hydrogen and a carbon compound, the mixed gas being obtained by reducing carbon dioxide, or a mixed gas containing hydrogen and a carbon compound, the mixed gas being obtained by reducing carbon dioxide produced by the apparatus itself.

According to the carbon dioxide production apparatus described in (15) above, hydrogen in the mixed gas derived from carbon dioxide gas produced by the carbon dioxide production apparatus can be used as pumping hydrogen to drive the carbon dioxide production apparatus, so that gas can be efficiently cycled within the system. The concentration of hydrogen in the mixed gas containing hydrogen and a carbon compound is not particularly limited, and may be, for example, less than 99 vol% or not less than 99 vol%.

(16) A carbon compound production system according to one aspect of the present disclosure includes: a carbon dioxide production apparatus; and a reduction apparatus configured to reduce carbon dioxide produced by the carbon dioxide production apparatus to produce a carbon compound. The carbon dioxide production apparatus includes: an electrolyte membrane; an anode disposed on one side of the electrolyte membrane and configured to generate protons from hydrogen; a cathode disposed on an other side of the electrolyte membrane and configured to generate hydrogen from protons; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution. The anode is configured to be supplied with a gas comprising a hydrogen concentration of less than 99 vol%.

Instead of the cathode configured to generate hydrogen from protons, the cathode may be a cathode configured to generate hydrogen.

A carbon compound production system according to another aspect of the present disclosure includes a carbon dioxide production apparatus and a reduction apparatus configured to reduce carbon dioxide produced by the carbon dioxide production apparatus to produce a carbon compound. The carbon dioxide production apparatus includes: an anode configured to generate protons from hydrogen; a cathode configured to generate hydrogen; a first liquid chamber configured to be supplied with a first electrolyte solution having absorbed carbon dioxide; a second liquid chamber configured to be supplied with a second electrolyte solution; and an electrolyte membrane disposed between the first liquid chamber and the second liquid chamber. The anode is configured to be supplied with a gas comprising a hydrogen concentration of less than 99 vol%. The cathode may be a cathode configured to generate hydrogen from protons.

The carbon compound production system may include the carbon dioxide production apparatus described in any one of (1) to (15) above and a reduction apparatus configured to reduce carbon dioxide produced by the carbon dioxide production apparatus to produce a carbon compound.

According to the carbon compound production system described in (16) above, the energy consumption of the entire system can be reduced.

(17) In the carbon compound production system described in (16) above, the reduction apparatus may be an electrolytic reduction apparatus.

(18) In the carbon compound production system described in (16) or (17) above, the reduction apparatus may be configured to produce a mixed gas containing the carbon compound and hydrogen, and supply the mixed gas produced by the reduction apparatus to the anode.

According to the carbon compound production system described in (17) and (18) above, the mixed gas containing the carbon compound and hydrogen produced by the electrolytic reduction apparatus can be used as a hydrogen raw material, so that gas can be efficiently cycled within the system. Since the carbon dioxide production apparatus produces carbon dioxide and separates hydrogen from the post-reduction product derived from a produced carbon dioxide, there is no need to separately provide a hydrogen separation step, thereby improving operating efficiency and further reducing energy consumption. There is no longer a need to separately provide a carbon dioxide production apparatus and a separation apparatus, which simplifies the system configuration.

(19) A carbon dioxide production method according to one aspect of the present disclosure is a carbon dioxide production method using a carbon dioxide production apparatus. The carbon dioxide production apparatus includes: an electrolyte membrane; an anode disposed on one side of the electrolyte membrane and configured to generate protons from hydrogen; a cathode disposed on an other side of the electrolyte membrane and configured to generate hydrogen from protons; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution. The method includes supplying, to the anode, a gas comprising a hydrogen concentration of less than 99 vol%.

Instead of the cathode configured to generate hydrogen from protons, the cathode may be a cathode configured to generate hydrogen.

A carbon dioxide production method according to another aspect of the present disclosure is a carbon dioxide production method using a carbon dioxide production apparatus. The carbon dioxide production apparatus includes: an anode configured to generate protons from hydrogen; a cathode configured to generate hydrogen; a first liquid chamber configured to be supplied with a first electrolyte solution having absorbed carbon dioxide; a second liquid chamber configured to be supplied with a second electrolyte solution; and an electrolyte membrane disposed between the first liquid chamber and the second liquid chamber. The anode is configured to be supplied with a gas comprising a hydrogen concentration of less than 99 vol%. The cathode may be a cathode configured to generate hydrogen from protons.

(19) A carbon dioxide concentration method according to one aspect of the present disclosure is a carbon dioxide concentration method using a carbon dioxide production apparatus. The carbon dioxide production apparatus includes: an electrolyte membrane; an anode disposed on one side of the electrolyte membrane and configured to generate protons from hydrogen; a cathode disposed on an other side of the electrolyte membrane and configured to generate hydrogen from protons; a first liquid chamber disposed between the anode and the electrolyte membrane and configured to be supplied with a first electrolyte solution having absorbed carbon dioxide; and a second liquid chamber disposed between the electrolyte membrane and the cathode and configured to be supplied with a second electrolyte solution. The method includes supplying, to the anode, a gas comprising a hydrogen concentration of less than 99 vol%.

Instead of the cathode configured to generate hydrogen from protons, the cathode may be a cathode configured to generate hydrogen.

A carbon dioxide concentration method according to another aspect of the present disclosure is a carbon dioxide concentration method using a carbon dioxide production apparatus. The carbon dioxide production apparatus includes: an anode configured to generate protons from hydrogen; a cathode configured to generate hydrogen; a first liquid chamber configured to be supplied with a first electrolyte solution having absorbed carbon dioxide; a second liquid chamber configured to be supplied with a second electrolyte solution; and an electrolyte membrane disposed between the first liquid chamber and the second liquid chamber. The anode is configured to be supplied with a gas comprising a hydrogen concentration of less than 99 vol%. The cathode may be a cathode configured to generate hydrogen from protons.

The present disclosure will be specifically described with reference to the drawings illustrating the embodiments thereof.

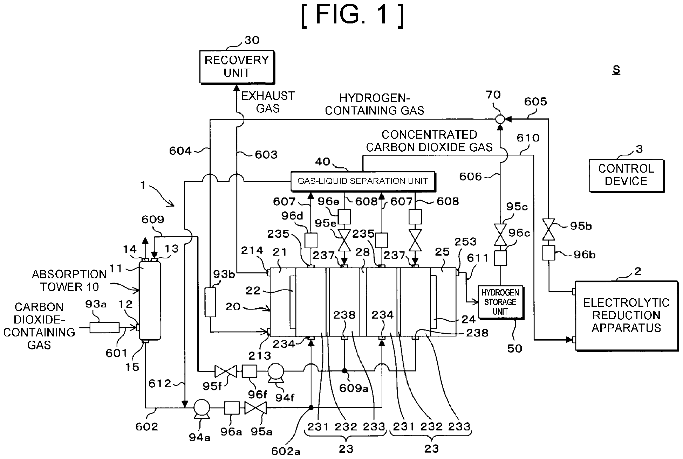

FIG. 1 is a schematic diagram of a carbon compound production system S. The carbon compound production system S of the present embodiment is a system that uses a carbon dioxide-containing gas containing carbon dioxide at a low concentration as a raw material gas, concentrates and recovers carbon dioxide from the raw material gas, and produces a carbon compound serving as a valuable resource from the recovered carbon dioxide. The carbon compound production system S of the present embodiment includes a concentration and separation apparatus 1, an electrolytic reduction apparatus 2, and a control device 3. The concentration and separation apparatus 1 includes an absorption tower 10, a concentration and separation unit 20, a recovery unit 30, a gas-liquid separation unit 40, and a hydrogen storage unit 50. The concentration and separation apparatus 1 is an example of a carbon dioxide production apparatus.

The absorption tower 10 brings a carbon dioxide-containing gas and a first electrolyte solution into gas-liquid contact, thereby causing the first electrolyte solution to absorb carbon dioxide. In the present specification, "absorption" means that carbon dioxide chemically reacts to form predetermined ions and dissolves. The absorption tower 10 is an example of a gas-liquid contact section.

The carbon dioxide-containing gas is a gas containing carbon dioxide at a low concentration, and is, for example, air, exhaust gas, or the like. The concentration of carbon dioxide in the carbon dioxide-containing gas is, for example, 0.01 vol% to 30 vol%. The carbon dioxide-containing gas may contain gases such as nitrogen, water vapor, carbon monoxide, hydrogen sulfide, carbonyl sulfide, sulfur dioxide, nitrogen dioxide, methane, and hydrogen, in addition to carbon dioxide.

The concentration and separation unit 20 causes carbon dioxide to desorb and be released from a liquid that has absorbed carbon dioxide, thereby generating concentrated carbon dioxide gas. The concentrated carbon dioxide gas contains a higher concentration of carbon dioxide than the carbon dioxide-containing gas. The concentration of carbon dioxide in the concentrated carbon dioxide gas is usually 90 vol% to 100 vol%. The concentrated carbon dioxide gas generated by the concentration and separation unit 20 is supplied to the electrolytic reduction apparatus 2.

The concentration and separation unit 20 constitutes an electrochemical hydrogen pump (electrochemical cell) including an anode 22 and a cathode 24. The concentration and separation unit 20 causes carbon dioxide to desorb from a liquid that has absorbed carbon dioxide using an electrodialysis method by hydrogen pumping. The concentration and separation unit 20 is supplied with a hydrogen-containing gas containing hydrogen. High-pressure hydrogen gas having a pressure higher than that of the hydrogen-containing gas is generated by the hydrogen boosting operation of the electrochemical hydrogen pump.

The concentration of hydrogen in the hydrogen-containing gas is less than 99 vol% in the hydrogen-containing gas. The concentration of hydrogen in the hydrogen-containing gas is preferably not more than 50 vol%, more preferably not more than 30 vol%, and still more preferably not more than 10 vol%. The lower limit of the concentration of hydrogen in the hydrogen-containing gas is not particularly limited, but may be, for example, not less than 0.01 vol%. The hydrogen-containing gas may be a gas containing hydrogen as an impurity. When the concentration of hydrogen in the gas is 100 vol%, the gas means a gas consisting only of hydrogen, i.e., pure hydrogen.

The hydrogen-containing gas may be a gas adjusted to have a hydrogen concentration of less than 99 vol% as a whole by mixing a gas comprising a hydrogen concentration of less than 99 vol% and a gas comprising a hydrogen concentration of not less than 99 vol%.

In the concentration and separation unit 20, hydrogen contained in the hydrogen-containing gas is supplied to the anode 22 of the electrochemical hydrogen pump, and protons are generated through an oxidation reaction. Components other than hydrogen contained in the hydrogen-containing gas remain unreacted. By supplying a mixed gas containing hydrogen and components other than hydrogen to the concentration and separation unit 20, hydrogen can be separated (removed) from the mixed gas, and a gas containing the components other than hydrogen can be discharged. The gas containing the components other than hydrogen is recovered by the recovery unit 30.

The concentration and separation apparatus 1 of the present embodiment functions as a carbon dioxide production apparatus that produces carbon dioxide at a high concentration, and also functions as a hydrogen separation apparatus that separates hydrogen from a hydrogen-containing gas.

The electrolytic reduction apparatus 2 generates a gas containing a carbon compound by electrolytically reducing carbon dioxide in the concentrated carbon dioxide gas obtained in the concentration and separation unit 20. The electrolytic reduction apparatus 2 is an example of a reduction apparatus. The electrolytic reduction apparatus 2 generates, for example, a mixed gas containing hydrogen and a carbon compound such as a hydrocarbon (e.g., methane, ethylene, etc.) or carbon monoxide. The concentration of hydrogen in the mixed gas is, for example, less than 99 vol% in the mixed gas, preferably not more than 50 vol%, more preferably not more than 30 vol%, and still more preferably not more than 10 vol%.

The mixed gas containing the carbon compound and hydrogen generated by the electrolytic reduction apparatus 2 is supplied to the concentration and separation unit 20. The concentration and separation unit 20 separates hydrogen from the mixed gas and discharges a gas containing the carbon compound. The gas containing the carbon compound can be used as a valuable resource.

The carbon compound production system S can realize carbon recycling in which carbon dioxide contained in the atmosphere or exhaust gas is used as a carbon resource and converted into various carbon compounds for reuse. The carbon compound production system S will be described in detail below.

The absorption tower 10 includes a main body 11 extending vertically, a gas inlet 12 disposed at a lower part of a side wall of the main body 11, a liquid inlet 13 and a gas outlet 14 disposed at an upper part of the main body 11, and a liquid outlet 15 disposed at a bottom part of the main body 11. The gas inlet 12 is connected via a first passage 601 to a carbon dioxide-containing gas supply source that is not illustrated.

The carbon dioxide-containing gas is supplied into the tower from the gas inlet 12 via the first passage 601, and is discharged from the gas outlet 14 after flowing through the tower.

A first electrolyte solution for absorbing carbon dioxide is supplied from the liquid inlet 13 and absorbs carbon dioxide by coming into contact with the carbon dioxide-containing gas in the tower. The first electrolyte solution that has absorbed carbon dioxide is supplied from the liquid outlet 15 to the concentration and separation unit 20 via a second passage 602.

A method for bringing the carbon dioxide-containing gas into contact with the first electrolyte solution is not particularly limited. Examples include: a method of bubbling the carbon dioxide-containing gas through the first electrolyte solution; a method of spraying the first electrolyte solution in a mist form into the carbon dioxide-containing gas by a spraying method or a spray method; a method of bringing the high-pressure carbon dioxide-containing gas and an absorption liquid into countercurrent contact in the absorption tower 10 filled with packing made of porcelain or metal mesh; and the like. Thereby, the first electrolyte solution that has absorbed carbon dioxide is obtained.

The first electrolyte solution of the present embodiment is a mixed liquid including an absorption liquid that contributes to absorption of carbon dioxide and an electrolyte solution that contributes to an oxidation-reduction reaction of hydrogen described below. The absorption liquid and the electrolyte solution are aqueous solutions containing the same cation (e.g., K⁺). In the present specification, "mixed liquid" means a liquid containing a component corresponding to the absorption liquid and a component corresponding to the electrolyte solution, and does not necessarily require actually mixing a separate absorption liquid and a separate electrolyte solution.

The absorption liquid contained in the first electrolyte solution is an alkaline aqueous solution. Examples of the alkaline aqueous solution include aqueous solutions of an alkali metal compound, an alkaline earth metal compound, an amine compound, and the like, and an aqueous solution of an alkali metal compound is preferable.

Examples of the alkali metal compound and the alkaline earth metal compound include compounds of alkali metals such as sodium, lithium, and potassium, or compounds of alkaline earth metals such as calcium, magnesium, and barium. As the alkali metal compound and the alkaline earth metal compound, hydroxides, oxides, and nitrates of alkali metals or alkaline earth metals are preferred, and hydroxides are more preferred. Specific examples of the alkaline aqueous solution include aqueous solutions of potassium hydroxide, sodium hydroxide, calcium hydroxide, and the like, and an aqueous solution of potassium hydroxide is preferable.

Examples of the amine compound include basic amines such as monoethanolamine, diethanolamine, diisopropanolamine, methyldiethanolamine, and triethanolamine. The alkaline aqueous solution may be used alone or in combination with two or more kinds thereof.

Examples of the electrolyte solution contained in the first electrolyte solution include a potassium chloride aqueous solution, a sodium chloride aqueous solution, and the like, and a potassium chloride aqueous solution is preferable. The electrolyte solution may be used alone or in combination with two or more kinds thereof.

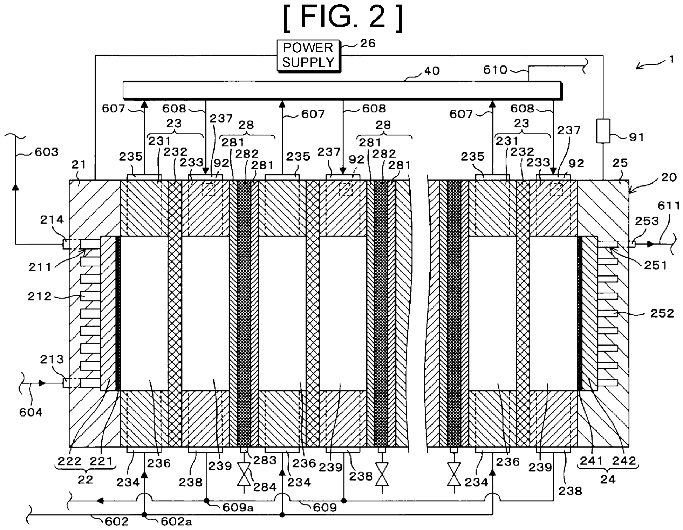

FIG. 2 is a cross-sectional view illustrating a configuration example of the concentration and separation unit 20. As illustrated in FIGS. 1 and 2, the concentration and separation unit 20 has a substantially rectangular cross section and has a substantially rectangular parallelepiped shape as a whole. The concentration and separation unit 20 further includes an anode plate 21 having an anode gas chamber (first gas chamber) 211, an anode 22, a plurality of electrolyte units 23, a cathode 24, a cathode plate 25 having a cathode gas chamber (second gas chamber) 251, and a power supply 26. The anode plate 21, the anode 22, the plurality of electrolyte units 23, the cathode 24, and the cathode plate 25 are arranged in this order and integrated by fastening with, for example, a fastening member that is not illustrated. Non-illustrated gaskets, may be arranged between the anode plate 21 and the anode 22 and between the cathode 24 and the cathode plate 25, respectively. In FIG. 1, two electrolyte units 23 are illustrated for simplification of description, but the concentration and separation unit 20 may include a large number of electrolyte units 23, such as 50 or 100.

Each electrolyte unit 23 includes an anode liquid chamber (first liquid chamber) 231, an electrolyte membrane 232, and a cathode liquid chamber (second liquid chamber) 233. In each electrolyte unit 23, the anode liquid chamber 231 is arranged on the anode 22 side and the cathode liquid chamber 233 is arranged on the cathode 24 side with the electrolyte membrane 232 interposed therebetween. The plurality of electrolyte units 23 are stacked with an intermediate layer 28 interposed therebetween to constitute a stacked body.

The anode plate 21 is formed with an anode gas chamber 211, through which a hydrogen-containing gas flows, at a portion facing the anode 22. The anode gas chamber 211 regulates the flow of the hydrogen-containing gas supplied to the anode 22.

The anode gas chamber 211 includes an anode gas flow path 212, a first supply port 213 connected to one end (inlet) of the anode gas flow path 212, and a first discharge port 214 connected to an other end (outlet) of the anode gas flow path 212. As an example, the anode gas flow path 212 is a groove-shaped flow path formed on a surface of the anode plate 21. The anode gas flow path 212 is a single flow path, and is arranged so as to fold back within a region of the surface of the anode plate 21 facing the anode 22. Alternatively, the anode gas flow path 212 may include a plurality of flow paths or may include a branch path. The hydrogen-containing gas supplied from the first supply port 213 is discharged from the first discharge port 214 after flowing through the anode gas flow path 212. In the region of the surface of the anode plate 21 facing the anode 22, a portion other than the portion in which the anode gas flow path 212 is formed is in contact with the surface of the anode 22, so that electrons can move between the anode plate 21 and the anode 22.

The anode plate 21 can also be composed of a plurality of parts having different functions. The anode plate 21 can also be configured by stacking, for example, an end plate, a current collector plate, and a plate member having the anode gas flow path 212 provided on one surface thereof, in this order. The end plate works with the above-mentioned fastening member, which is not illustrated, and an end plate on the cathode side to fasten and integrate parts constituting the concentration and separation unit 20. The current collector plate performs movement of electrons to and from the anode 22 via the plate member provided with the anode gas flow path 212, and is connected to the power supply 26 via wiring. The plate member provided with the anode gas flow path 212 constitutes the anode gas chamber 211 by the flow path, and regulates the flow of the hydrogen-containing gas supplied to the anode 22.

In the example illustrated in FIG. 2, the first supply port 213 is disposed at a lower part of the anode plate 21, and the first discharge port 214 is disposed at an upper part of the anode plate 21. When the anode plate 21 has a substantially rectangular parallelepiped shape extending vertically, the first supply port 213 and the first discharge port 214 may be disposed near diagonal vertices, or may be disposed near the centers of the respective short sides.

The first discharge port 214 is connected to the recovery unit 30 via a third passage 603. The first supply port 213 is connected to the electrolytic reduction apparatus 2 via a fourth passage 604, a merging unit 70, and a fifth passage 605. The first supply port 213 is also connected to the hydrogen storage unit 50 via the fourth passage 604, the merging unit 70, and a sixth passage 606.

The cathode plate 25 is formed with a cathode gas chamber 251, through which hydrogen gas generated by the cathode 24 flows, at a portion facing the cathode 24. Hereinafter, the hydrogen gas generated by the cathode 24 is also referred to as high-pressure hydrogen gas.

The cathode gas chamber 251 includes a cathode gas flow path 252 and a second discharge port 253 connected to one end (outlet) of the cathode gas flow path 252. As an example, the cathode gas flow path 252 is a groove-shaped flow path formed on a surface of the cathode plate 25. The cathode gas flow path 252 is a single flow path and is arranged so as to fold back within a region of the surface of the cathode plate 25 facing the cathode 24. Alternatively, the cathode gas flow path 252 may include a plurality of flow paths or may include a branch path. The high-pressure hydrogen gas supplied to the cathode gas flow path 252 flows toward the second discharge port 253. In the region of the surface of the cathode plate 25 facing the cathode 24, a portion other than the portion in which the cathode gas flow path 252 is formed is in contact with the surface of the cathode 24, so that electrons can move between the cathode plate 25 and the cathode 24. Note that, similarly to the anode plate 21, the cathode plate 25 can also be composed of a plurality of parts having different functions.

In the example illustrated in FIG. 2, the second discharge port 253 is disposed at an upper part of the cathode plate 25. The second discharge port 253 is connected to the hydrogen storage unit 50 via an eleventh passage 611. The hydrogen storage unit 50 stores high-pressure hydrogen gas discharged from the cathode gas chamber 251.

In the concentration and separation unit 20, the flow rate of gas per unit time in the anode gas flow path 212 is preferably larger than the flow rate of gas per unit time in the cathode gas flow path 252. For example, by making the flow path cross-sectional area of the anode gas flow path 212 larger than the flow path cross-sectional area of the cathode gas flow path 252, the flow rate of gas per unit time in the anode gas flow path 212 may be made larger than the flow rate of gas per unit time in the cathode gas flow path 252. The flow rate of the hydrogen-containing gas supplied to the anode gas chamber 211 may be adjusted by a compressor 93b. According to the above configuration, even when a hydrogen-containing gas containing hydrogen at a low concentration is used, a sufficient amount of gas can be supplied to the anode 22, so that insufficient oxidation reaction of hydrogen can be suppressed.

Note that the flow rate of gas per unit time in the anode gas flow path 212 means the flow rate near the inlet of the anode gas flow path 212. The flow rate of gas per unit time in the anode gas flow path 212 is the same as a flow rate of the hydrogen-containing gas per unit time supplied to the first supply port 213. The flow rate of gas per unit time in the cathode gas flow path 252 means the flow rate near the outlet of the cathode gas flow path 252. The flow rate of gas per unit time in the cathode gas flow path 252 is the same as a flow rate of the high-pressure hydrogen gas per unit time discharged from the second discharge port 253.

The flow path cross-sectional area of the anode gas flow path 212 and the flow path cross-sectional area of the cathode gas flow path 252 mean the areas of the cross sections appearing when the respective flow paths are cut by a plane perpendicular to a direction in which the fluid flows. When the above-mentioned cross-sectional area is substantially uniform from the inlet to the outlet of each flow path, the cross-sectional area at an arbitrary distance from the inlet is taken as the flow path cross-sectional area of the respective flow path. When the cross-sectional area changes as the distance from the inlet of the flow path increases, the average value of the cross-sectional area near the inlet and the cross-sectional area near the outlet may be used as the respective flow path cross-sectional area, or the average value of the cross-sectional area near the inlet, the cross-sectional area near the outlet, and the cross-sectional area at one or more positions in the flow path may be used as the respective flow path cross-sectional area. The one or more positions in the flow path may be a point at one-half of the distance from the inlet to the outlet. The above inlet and outlet mean the inlet and outlet of the anode gas flow path 212 in the case of the flow path cross-sectional area of the anode gas flow path 212, and the inlet and outlet of the cathode gas flow path 252 in the case of the flow path cross-sectional area of the cathode gas flow path 252.

The anode plate 21 is electrically connected to the anode 22. The cathode plate 25 is electrically connected to the cathode 24. The anode plate 21 and the cathode plate 25 are connected to a power supply 26 via wiring. The concentration and separation unit 20 includes a current sensor 91 that detects a current flowing between the anode 22 and the cathode 24.

The power supply 26 applies a voltage to the anode 22 and the cathode 24 via the anode plate 21 and the cathode plate 25. A terminal on the high potential side of the power supply 26 is connected to the anode plate 21, and a terminal on the low potential side is connected to the cathode plate 25.

The anode 22 is supplied with the hydrogen-containing gas and generates protons from hydrogen in the hydrogen-containing gas. The anode 22 is a gas diffusion electrode and includes an anode catalyst layer 221 containing an anode catalyst and an anode gas diffusion layer 222. The anode catalyst layer 221 is disposed on one surface of the anode gas diffusion layer 222. An anode liquid chamber 231 contacts the surface of the anode 22 on the side of the anode catalyst layer 221, and the anode plate 21 (anode gas chamber 211) contacts the surface of the anode 22 on the side of the anode gas diffusion layer 222. The anode catalyst layer 221 may be formed by supporting fine particles of an anode catalyst in a highly dispersed state on the anode gas diffusion layer 222. Such an anode catalyst layer 221 can be produced, for example, by applying a mixture containing fine particles of an anode catalyst, a cation exchange resin, and a solvent onto a predetermined base material, then drying the solvent, and transferring the dried mixture from the base material to the surface of the anode gas diffusion layer 222. Alternatively, by using the anode gas diffusion layer 222 as a predetermined base material, the anode catalyst layer 221 can be directly formed on the surface of the anode gas diffusion layer 222 and in a range of a predetermined thickness from the surface.

Examples of the anode catalyst include platinum, ruthenium, rhodium, palladium, iridium, and the like. As the anode catalyst, one kind may be used alone, or two or more kinds may be used in combination. When two or more kinds are combined, for example, a combination containing at least platinum and ruthenium can be used. An anode catalyst using such a combination has improved durability against a catalyst poisoning phenomenon caused by carbon monoxide, as compared with an anode catalyst using platinum alone, for example. The thickness of the anode catalyst layer 221 is, for example, 5 µm to 50 µm. Protons can be effectively generated when the thickness of the anode catalyst layer 221 is within the above range.

The anode gas diffusion layer 222 is composed of a porous material and has conductivity and gas diffusivity. The anode gas diffusion layer 222 uniformly diffuses the hydrogen-containing gas supplied from the fourth passage 604 via the anode gas flow path 212 to the anode catalyst layer 221. Examples of the anode gas diffusion layer 222 include porous carbon fiber sheets such as carbon paper, carbon cloth, and carbon felt, sintered bodies made of carbon particles, and the like, and carbon paper is preferable. The anode gas diffusion layer 222 may be, for example, a sintered body of metal fibers made of a titanium alloy, stainless steel, or the like, a sintered body of metal powder, a metal mesh, a foamed metal body, or the like. The thickness of the anode gas diffusion layer 222 is, for example, 100 µm to 1000 µm. Gas diffusivity in the direction from the anode 22 side toward the cathode 24 side can be improved when the thickness of the anode gas diffusion layer 222 is within the above range.

The cathode 24 generates hydrogen from protons supplied from the anode 22 side. The cathode 24 is a gas diffusion electrode and includes a cathode catalyst layer 241 containing a cathode catalyst and a cathode gas diffusion layer 242. The cathode catalyst layer 241 is disposed on one surface of the cathode gas diffusion layer 242. A cathode liquid chamber 233 contacts the surface of the cathode 24 on the side of the cathode catalyst layer 241, and the cathode plate 25 (cathode gas chamber 251) contacts the surface of the cathode 24 on the side of the cathode gas diffusion layer 242. The cathode catalyst layer 241 may be formed by supporting fine particles of a cathode catalyst in a highly dispersed state on the cathode gas diffusion layer 242. As a method for producing such a cathode catalyst layer 241, a method similar to that for the anode catalyst layer 221 described above can be used, and, for example, the cathode catalyst layer 241 can be produced by a method including a step of applying a mixture containing fine particles of a cathode catalyst, a cation exchange resin, and a solvent onto a predetermined base material and then drying the solvent.

Examples of the cathode catalyst include those similar to the anode catalyst described above, and platinum is preferred. As the cathode catalyst, one kind may be used alone, or two or more kinds may be used in combination. The thickness of the cathode catalyst layer 241 is, for example, 5 µm to 50 µm. Hydrogen can be effectively generated when the thickness of the cathode catalyst layer 241 is within the above range.

The cathode gas diffusion layer 242 is composed of a porous material and has conductivity and gas diffusivity. Examples of the material of the cathode gas diffusion layer 242 include materials similar to those of the anode gas diffusion layer 222 described above. The thickness of the cathode gas diffusion layer 242 is, for example, 100 µm to 1000 µm. Hydrogen diffusivity in the direction from the anode 22 side toward the cathode 24 side can be improved when the thickness of the cathode gas diffusion layer 242 is within the above range.

The anode 22 and the cathode 24 are each preferably subjected to a water repellent treatment. The water repellent treatment is performed, for example, by adding or laminating a water repellent material such as polytetrafluoroethylene to the anode gas diffusion layer 222 and the cathode gas diffusion layer 242. Water repellency can also be imparted to the anode 22 and the cathode 24 by performing a similar water repellent treatment on the anode catalyst layer 221 and the cathode catalyst layer 241. By imparting water repellency, leakage of liquid from the anode liquid chamber 231 to the anode 22 and leakage of liquid from the cathode liquid chamber 233 to the cathode 24 can be suppressed. As a means for suppressing leakage of these liquids, in addition to a method of performing the water repellent treatment on the anode 22 and the cathode 24, a polymer membrane having an ion exchange group may be disposed between the anode 22 and the anode liquid chamber 231 and between the cathode 24 and the cathode liquid chamber 233. Examples of the material of the polymer membrane having an ion exchange group include Nafion (registered trademark). By providing such a membrane, it is possible to suppress movement of the liquid in the liquid chamber toward the electrode side while maintaining movement of charge.

The electrolyte unit 23 includes an electrolyte membrane 232, an anode liquid chamber 231 arranged on the anode 22 side with the electrolyte membrane 232 interposed therebetween, and a cathode liquid chamber 233 arranged on the cathode 24 side. All the electrolyte units 23 have a similar configuration. The electrolyte membrane 232 is a cation exchange membrane (CEM) and is composed of an electrolyte material having cation conductivity. Examples of the electrolyte membrane 232 include fluorine-based cation exchange membranes such as perfluorosulfonic acid-based membranes. The thickness of the electrolyte membrane 232 is, for example, 2 µm to 500 µm.

The anode liquid chamber 231 is composed of, for example, a resin and is in a flat plate shape extending vertically. The anode liquid chamber 231 includes a third supply port 234 disposed at a lower part, a third discharge port 235 disposed at an upper part, and an anode liquid flow path 236 formed between the third supply port 234 and the third discharge port 235. One end (inlet) of the anode liquid flow path 236 is connected to the third supply port 234, and an other end (outlet) of the anode liquid flow path 236 is connected to the third discharge port 235. In the anode liquid flow path 236, the liquid flows from the inlet toward the outlet.

The shape of the anode liquid chamber 231 and the positions of the third supply port 234 and the third discharge port 235 in the anode liquid chamber 231 are not limited to the above examples. For example, the third supply port 234 may be disposed at an upper part or a side part of the anode liquid chamber 231, and the third discharge port 235 may be disposed at a lower part or a side part of the anode liquid chamber 231.

Concentrated carbon dioxide gas is released from the first electrolyte solution in the anode liquid flow path 236. A gas-liquid mixture of the released concentrated carbon dioxide gas and a second electrolyte solution, which is the electrolyte solution after releasing carbon dioxide, is discharged from the third discharge port 235 after flowing through the anode liquid flow path 236.

The anode liquid flow path 236 is a space formed between the anode catalyst layer 221 and the electrolyte membrane 232, and is partitioned from the outside by a frame body such as a resin constituting the anode liquid chamber 231. The anode liquid flow path 236 is arranged so that the entire one surface of the anode catalyst layer 221 comes into contact with the electrolyte solution when the space is filled with the electrolyte solution. The anode liquid flow path 236 includes a net-shaped flow path forming member as a spacer, and may be configured by a space created by three-dimensional intersection of the flow path forming member. The spacer prevents the anode liquid flow path 236 from being clogged due to deformation or the like of the anode catalyst layer 221 and the electrolyte membrane 232.

Each of the third supply ports 234 of the respective anode liquid chambers 231 is connected to the absorption tower 10 via the second passage 602. The second passage 602 branches at a branch point 602a and is connected to each of the anode liquid chambers 231. Each of the third discharge ports 235 of the respective anode liquid chambers 231 is connected to the gas-liquid separation unit 40 via a seventh passage 607. A plurality of seventh passages 607 are disposed corresponding to the respective anode liquid chambers 231. The respective seventh passages 607 may merge on the downstream side.

The cathode liquid chamber 233 is composed of, for example, a resin and has a flat plate shape extending vertically. The cathode liquid chamber 233 includes a fourth supply port 237 disposed at an upper part, a fourth discharge port 238 disposed at a lower part, and a cathode liquid flow path 239 formed between the fourth supply port 237 and the fourth discharge port 238. One end (inlet) of the cathode liquid flow path 239 is connected to the fourth supply port 237, and an other end (outlet) of the cathode liquid flow path 239 is connected to the fourth discharge port 238. In the cathode liquid flow path 239, the liquid flows from the inlet toward the outlet.

The cathode liquid flow path 239 is a space configured between the electrolyte membrane 232 and the cathode catalyst layer 241, and is partitioned from the outside by a frame body such as a resin constituting the cathode liquid chamber 233. It is arranged so that the entire one surface of the cathode catalyst layer 241 comes into contact with the electrolyte solution when the space is filled with the electrolyte solution. The cathode liquid flow path 239 may include a spacer similarly to the anode liquid flow path 236.

In the cathode liquid chamber 233, the second electrolyte solution is supplied through the fourth supply port 237, and the first electrolyte solution in which the absorption liquid component has been regenerated is discharged from the fourth discharge port 238.

Each of the fourth supply ports 237 of the respective cathode liquid chambers 233 is connected to the gas-liquid separation unit 40 via an eighth passage 608. A plurality of eighth passages 608 are disposed corresponding to the respective cathode liquid chambers 233. The respective eighth passages 608 may merge on the upstream side. Each of the fourth discharge ports 238 of the respective cathode liquid chambers 233 is connected to the absorption tower 10 via a ninth passage 609. The ninth passage 609 branches so as to correspond to the respective cathode liquid chambers 233 and merges at a junction 609a.

A liquid sensor 92 is disposed in each cathode liquid chamber 233. The liquid sensor 92 is, for example, a pH meter and measures the pH of the liquid in the cathode liquid chamber 233. The liquid sensor 92 may be disposed in the eighth passage 608 or the ninth passage 609.

In the concentration and separation unit 20, one electrolyte unit 23 and an other electrolyte unit 23 adjacent to each other are stacked in the same direction with each other via the intermediate layer 28. One surface of the intermediate layer 28 contacts the cathode liquid chamber 233 of one electrolyte unit 23, and an other surface of the intermediate layer 28 contacts the anode liquid chamber 231 of an other electrolyte unit 23. The intermediate layer 28 supplies protons supplied from the cathode liquid chamber 233 of one electrolyte unit 23 to the anode liquid chamber 231 of an other adjacent electrolyte unit 23.

The intermediate layer 28 includes a catalyst layer 281 containing a catalyst and a gas diffusion layer 282. The catalyst layer 281 is formed on both surfaces of the gas diffusion layer 282. The catalyst layer 281 may be configured by supporting fine particles of a catalyst in a highly dispersed state on the surface of the gas diffusion layer 282.

Examples of the catalyst include catalysts similar to the above-mentioned anode catalyst, and platinum is preferred. As the catalyst, one kind may be used alone, or two or more kinds may be used in combination. The catalyst is preferably used in a fine particle state, and fine particles of a metal that functions as a catalyst such as the above-mentioned platinum may be used, or the fine particles of the metal supported on a surface of a carrier having electron conductivity such as carbon black may be used. Such a catalyst layer 281 can be produced, for example, by applying a mixture containing fine particles of a catalyst, a cation exchange resin, and a solvent onto a predetermined base material, then drying the solvent, and transferring the dried mixture from the base material to the surface of the gas diffusion layer 282. Alternatively, by using the gas diffusion layer 282 as a predetermined base material, the catalyst layer 281 can be directly formed on the surface of the gas diffusion layer 282 and in a range of a predetermined thickness from the surface.

The thickness of the catalyst layer 281 is, for example, 5 µm to 50 µm. Reactivity of the catalyst can be enhanced when the thickness of the catalyst layer 281 is not less than 5 µm. The operating voltage of the electrochemical cell can be further lowered by shortening the movement distance of protons when the thickness is not more than 50 µm.

The gas diffusion layer 282 is composed of a porous material and has conductivity and gas diffusivity. The gas diffusion layer 282 uniformly diffuses hydrogen molecules supplied from the catalyst layer 281 in contact with the cathode liquid chamber 233 to the catalyst layer 281 in contact with the anode liquid chamber 231. Examples of the material constituting the gas diffusion layer 282 include materials similar to those of the above-mentioned anode gas diffusion layer 222, and carbon paper is preferred. The thickness of the gas diffusion layer 282 is, for example, 100 µm to 1000 µm. Hydrogen diffusivity in the direction from the anode 22 side toward the cathode 24 side can be improved when the thickness of the gas diffusion layer 282 is within the above range.

The intermediate layer 28 is preferably subjected to a water repellent treatment. The water repellent treatment is performed, for example, by adding or laminating a water repellent material such as polytetrafluoroethylene to at least one of the pair of catalyst layers 281 or the gas diffusion layer 282. By imparting water repellency, leakage of liquid from the anode liquid chamber 231 and the cathode liquid chamber 233 to the intermediate layer 28 can be suppressed.

As a means for suppressing such leakage of liquid, in addition to the method of imparting water repellency to the intermediate layer 28, a polymer membrane having an ion exchange group may be disposed in at least one of: between the cathode liquid chamber 233 and the catalyst layer 281 in contact with the cathode liquid chamber 233; or between the anode liquid chamber 231 and the catalyst layer 281 in contact with the anode liquid chamber 231. Examples of the material of the polymer membrane having an ion exchange group include Nafion (registered trademark). By providing such a membrane, it is possible to suppress movement of the liquid in the liquid chamber into the intermediate layer while maintaining movement of charge. In particular, when a polymer membrane having an ion exchange group is disposed between the cathode liquid chamber 233 and the catalyst layer 281 in contact with the cathode liquid chamber 233, it is preferable that the catalyst layer 281 and the polymer membrane having the ion exchange group are bonded to each other, or are brought into contact and then pressed so as to be in close contact with each other. By adopting such a configuration, hydrogen gas generated in the catalyst layer 281 can be suppressed from moving toward the cathode liquid chamber 233 side, and the proportion of hydrogen gas moving toward the gas diffusion layer 282 side can be increased.

Examples of a method for bonding the catalyst layer 281 and the polymer membrane having the ion exchange group include: a method of forming, in a bonded state, a film of a polymer having an ion exchange group by applying a mixture containing the polymer and a solvent to a surface of the catalyst layer 281 so as to have a predetermined thickness and then drying the mixture; a method of pressure-bonding by so-called hot pressing in which a polymer membrane having an ion exchange group is pressed against the surface of the catalyst layer 281 and heat-treated at a predetermined temperature; and the like. The temperature of the heat treatment in the latter method is preferably not less than the glass transition temperature of the polymer membrane having the ion exchange group.

It is preferable that the intermediate layer 28 further includes a sixth discharge port 283 for discharging liquid and a valve 284 for opening and closing the sixth discharge port 283. The sixth discharge port 283 may be disposed at a lower part of the gas diffusion layer 282. The sixth discharge port 283 discharges water generated inside the gas diffusion layer 282 of the intermediate layer 28 due to the passage of protons to the outside. Protons move while accompanying water (so-called hydration water) when passing through the catalyst layer 281 of the intermediate layer 28, and the water remains as liquid water inside the gas diffusion layer 282. By discharging this stagnant water through the sixth discharge port 283, hydrogen diffusivity inside the gas diffusion layer 282 can be improved. By switching opening and closing of the valve 284, water can be appropriately discharged and leakage of hydrogen can be suppressed.

The gas-liquid separation unit 40 separates the concentrated carbon dioxide gas and the second electrolyte solution from each other. The gas-liquid separation unit 40 performs gas-liquid separation by, for example, a water displacement method, a gravity separation method, or the like. The gas-liquid separation unit 40 receives a gas-liquid mixture discharged from each of the anode liquid chambers 231 via the seventh passage 607. The gas-liquid separation unit 40 supplies the second electrolyte solution from which the concentrated carbon dioxide gas has been separated to each of the cathode liquid chambers 233 via the eighth passage 608.

The gas-liquid separation unit 40 is connected to the electrolytic reduction apparatus 2 via a tenth passage 610. The gas-liquid separation unit 40 supplies the separated concentrated carbon dioxide gas to the electrolytic reduction apparatus 2 via the tenth passage 610.

The electrolytic reduction apparatus 2 generates a carbon compound by electrolyzing carbon dioxide together with water. The configuration of the electrolytic reduction apparatus 2 is not particularly limited, but examples include a configuration including an anode, a cathode, and an ion exchange membrane arranged between the anode and the cathode. The gas obtained in the electrolytic reduction apparatus 2 is a mixed gas containing hydrogen as a by-product in addition to the carbon compound as a post-reduction product. The electrolytic reduction apparatus 2 is connected to the merging unit 70 via the fifth passage 605.

The merging unit 70 merges, as necessary, a mixed gas sent from the electrolytic reduction apparatus 2 as a first hydrogen source and hydrogen gas sent from the hydrogen storage unit 50 as a second hydrogen source, and supplies the merged gas to the concentration and separation unit 20. The merging unit 70 may further be connected to a third hydrogen source. The third hydrogen source is, for example, a hydrogen tank filled in advance with pure hydrogen comprising a hydrogen concentration of 100 vol%. Hydrogen from the third hydrogen source may be supplied to the hydrogen storage unit 50.

FIG. 1 illustrates an example in which the merging unit 70 is disposed outside the concentration and separation unit 20. Alternatively, the merging unit 70 may be disposed inside the concentration and separation unit 20. In a case where the merging unit 70 is disposed inside the concentration and separation unit 20, it may be configured as follows. The concentration and separation unit 20 includes a first "first supply port 213" connected to the fifth passage 605 and a second "first supply port 213" connected to the sixth passage 606. Both the first "first supply port 213" and the second "first supply port 213" are connected to the inlet of the anode gas flow path 212 via the merging unit 70 inside the concentration and separation unit 20.

As described above, the carbon compound production system S includes first through eleventh passages 601 to 611. The first passage 601 causes the carbon dioxide-containing gas to flow from the carbon dioxide-containing gas supply source to the absorption tower 10. The first passage 601 includes a compressor 93a. The second passage 602 causes the first electrolyte solution to flow from the absorption tower 10 to the anode liquid chamber 231. The second passage 602 includes a pump 94a, a control valve 95a, and a flowmeter 96a. The third passage 603 causes an exhaust gas from which hydrogen has been separated to flow from the anode gas chamber 211 to the recovery unit 30. The fourth passage 604 causes a hydrogen-containing gas containing the mixed gas and/or high-pressure hydrogen gas to flow from the merging unit 70 to the anode gas chamber 211. The fourth passage 604 includes a compressor 93b. The fifth passage 605 causes the mixed gas to flow from the electrolytic reduction apparatus 2 to the merging unit 70. The fifth passage 605 includes a control valve 95b and a flowmeter 96b. The sixth passage 606 causes high-pressure hydrogen gas to flow from the hydrogen storage unit 50 to the merging unit 70. The sixth passage 606 includes a control valve 95c and a flowmeter 96c.

The seventh passage 607 causes a gas-liquid mixture to flow from the anode liquid chamber 231 to the gas-liquid separation unit 40. The seventh passage 607 includes a flowmeter 96d. The eighth passage 608 causes the second electrolyte solution to flow from the gas-liquid separation unit 40 to the cathode liquid chamber 233. The eighth passage 608 includes a control valve 95e and a flowmeter 96e. The ninth passage 609 causes the first electrolyte solution to flow from the cathode liquid chamber 233 to the absorption tower 10. The ninth passage 609 includes a pump 94f, a control valve 95f, and a flowmeter 96f. The tenth passage 610 causes concentrated carbon dioxide gas to flow from the gas-liquid separation unit 40 to the electrolytic reduction apparatus 2. The eleventh passage 611 causes high-pressure hydrogen gas to flow from the cathode gas chamber 251 to the hydrogen storage unit 50.

The compressors 93a and 93b compress and send out gas. The pumps 94a and 94f send out fluid. The control valves 95a, 95b, 95c, 95e, and 95f control the volumetric flow rate or mass flow rate of fluid flowing through the passages. The flowmeters 96a, 96b, 96c, 96d, 96e, and 96f measure the volumetric flow rate or mass flow rate of fluid flowing through the passages. The fourth passage 604 and the fifth passage 605 may include a gas sensor that detects gas concentration. Hereinafter, the compressors 93a and 93b are collectively referred to as a compressor 93. The pumps 94a and 94f are collectively referred to as a pump 94. The control valves 95a, 95b, 95c, 95e, and 95f are collectively referred to as a control valve 95. The flowmeters 96a, 96b, 96c, 96d, 96e, and 96f are collectively referred to as a flowmeter 96.

The absorption tower 10, the second passage 602, the concentration and separation unit 20, the seventh passage 607, the gas-liquid separation unit 40, the eighth passage 608, and the ninth passage 609 constitute a circulation system for the electrolyte solution. The electrolyte solution including the absorption liquid and the electrolyte solution is cyclically used so as to absorb carbon dioxide in the absorption tower 10, release carbon dioxide in the concentration and separation unit 20, and then absorb carbon dioxide again in the absorption tower 10.

The carbon compound production system S includes a first bypass passage 612 that enables the second electrolyte solution discharged from the anode liquid chamber 231 to bypass the cathode liquid chamber 233. The first bypass passage 612 allows the first electrolyte solution to flow from the gas-liquid separation unit 40 to the second passage 602 while bypassing the cathode liquid chamber 233. One end of the first bypass passage 612 is connected to an upstream side of the branch point 602a of the second passage 602. Alternatively, the first bypass passage 612 may connect the second passage 602 to the eighth passage 608. The carbon compound production system S may further include a second bypass passage, which is not illustrated, that enables the first electrolyte solution discharged from the cathode liquid chamber 233 to bypass the absorption tower 10 and the anode liquid chamber 231. One end of the second bypass passage is connected to the ninth passage 609, and an other end is connected to the eighth passage 608.

The control device 3 is a computer and includes a processor such as a Central Processing Unit (CPU), which is not illustrated, a memory, an input/output interface, and the like. The memory stores various computer programs and data referred to by the processor. The input/output interface is connected to the current sensor 91, the liquid sensor 92, the compressor 93, the pump 94, the control valve 95, and the flowmeter 96, respectively. The control device 3 obtains measured values from the current sensor 91, the liquid sensor 92, and the flowmeter 96. The control device 3 outputs control signals to the compressor 93, the pump 94, and the control valve 95 to control the drive thereof. Details of the control content executed by the control device 3 will be described below.

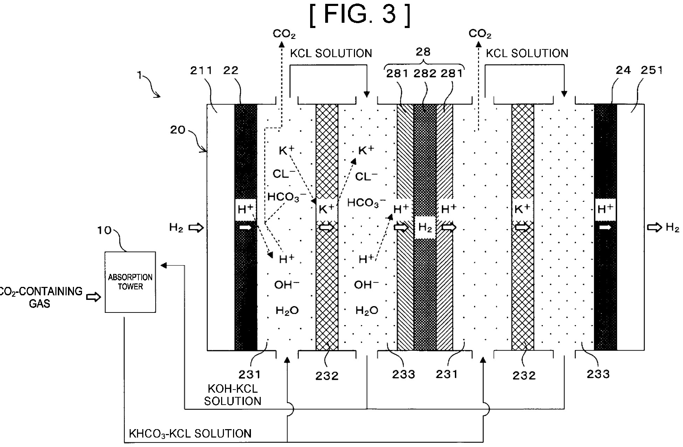

FIG. 3 is an explanatory diagram for explaining the operation of the concentration and separation apparatus 1. The operations of the concentration and separation apparatus 1 and the carbon compound production system S will be described using FIG. 3. In FIG. 3, an example in which two electrolyte units 23 are stacked is illustrated for simplification of description.

The carbon dioxide-containing gas containing carbon dioxide at a low concentration is supplied to the absorption tower 10, and the first electrolyte solution is supplied thereto. The carbon dioxide-containing gas is supplied after being pressurized by the compressor 93a as necessary. The first electrolyte solution is supplied at a predetermined flow rate by driving the pump 94f. In the present embodiment, the first electrolyte solution is set as a mixed liquid (KOH-KCL solution) of a potassium hydroxide aqueous solution serving as an absorption liquid and a potassium chloride aqueous solution serving as an electrolyte solution.

The absorption reaction of the carbon dioxide-containing gas in the absorption tower 10 is represented by the following reaction formula (1).

KOH + CO₂ → KHCO₃ ... (1)

Through the absorption reaction, the first electrolyte solution (KHCO₃-KCL solution) that has absorbed carbon dioxide is obtained. In the first electrolyte solution, carbon dioxide becomes a bicarbonate ion. The first electrolyte solution (KHCO₃-KCL solution) that has absorbed carbon dioxide is supplied to the concentration and separation unit 20 at a predetermined flow rate via the second passage 602 by driving the pump 94a.

More specifically, through progress of the absorption reaction of carbon dioxide represented by the following reaction formulas (1-1) and (1-2), the first electrolyte solution (KHCO₃-KCL solution) that has absorbed carbon dioxide is obtained.

2KOH + CO₂ → K₂CO₃ + H₂O ... (1-1)

K₂CO₃ + H₂O + CO₂ → 2KHCO₃ ... (1-2)

The first electrolyte solution may be an electrolyte solution in which potassium hydroxide (KOH) has completely reacted to potassium bicarbonate (KHCO₃), or may be an electrolyte solution partially containing potassium carbonate (K₂CO₃), which is a product of the above reaction formula (1-1). The first electrolyte solution may be an electrolyte solution in which most of potassium hydroxide has reacted to potassium carbonate (K₂CO₃), obtained by stopping the carbon dioxide absorption reaction at the above reaction formula (1-1). In the first electrolyte solution, carbon dioxide can form a bicarbonate ion (HCO₃⁻).

In the concentration and separation unit 20, the first electrolyte solution (KHCO₃-KCL solution) that has absorbed carbon dioxide is supplied from the third supply port 234 of the anode liquid chamber 231, and the hydrogen-containing gas is supplied from the first supply port 213 of the anode gas chamber 211. A voltage is applied from the power supply 26 to the anode 22 and the cathode 24. The hydrogen-containing gas may include only the mixed gas from the electrolytic reduction apparatus 2, or may include a merged gas obtained by merging the high-pressure hydrogen gas from the hydrogen storage unit 50 and the mixed gas. The hydrogen-containing gas includes hydrogen and a carbon compound. The hydrogen-containing gas is supplied after being pressurized by the compressor 93b as necessary.

While the hydrogen-containing gas passes through the anode gas flow path 212, the hydrogen-containing gas is supplied from the anode gas diffusion layer 222 to the anode catalyst layer 221. In the anode catalyst layer 221 of the anode 22, hydrogen molecules are separated into protons (H⁺) and electrons through an oxidation reaction, as represented by the following reaction formula (2).

H₂ → 2H⁺ + 2e⁻ ... (2)

Among the components contained in the hydrogen-containing gas, hydrogen is consumed in the anode catalyst layer 221, and the carbon compound (component other than hydrogen) remains unreacted. The gas containing the carbon compound, that is, the exhaust gas after separation of hydrogen, is discharged from the first discharge port 214. The recovery unit 30 recovers the discharged exhaust gas.

Protons (H⁺) generated in the anode catalyst layer 221 move to the anode liquid chamber 231 adjacent to the anode 22. Due to the protons (H⁺) supplied from the anode catalyst layer 221, the pH of the KHCO₃ solution in the anode liquid chamber 231 becomes lower than that before the oxidation reaction. The chemical equilibrium of the following reaction formula (3) moves to the right, and carbon dioxide is generated. HCO₃⁻ + H⁺ ⇔ CO₂ + H₂O ... (3)

By release of carbon dioxide from the first electrolyte solution, the liquid in the anode liquid flow path 236 becomes a second electrolyte solution (KCL solution) composed mainly of potassium chloride. The second electrolyte solution may slightly contain KHCO₃. A gas-liquid mixture of the concentrated carbon dioxide gas containing generated carbon dioxide and the second electrolyte solution (KCL solution) is supplied to the gas-liquid separation unit 40 via the third discharge port 235 and the seventh passage 607.

In the gas-liquid separation unit 40, the concentrated carbon dioxide gas and the second electrolyte solution (KCL solution) are separated from each other. The concentrated carbon dioxide gas is supplied to the electrolytic reduction apparatus 2 via the tenth passage 610. The second electrolyte solution (KCL solution) is supplied to the cathode liquid chamber 233 via the eighth passage 608 and the fourth supply port 237.

In the electrolyte membrane 232, potassium ions (K⁺) in the first electrolyte solution move through the inside of the electrolyte membrane 232 to the cathode liquid chamber 233 by electrodialysis.

Due to the potassium ions (K⁺) that have permeated through the electrolyte membrane 232, potassium ions (K⁺) in the second electrolyte solution (KCL solution) in the cathode liquid chamber 233 increase. As the potassium ions (K⁺) increase, protons (H⁺) are supplied to the intermediate layer 28. In response to the consumption of protons (H⁺), the pH of the second electrolyte solution (KCL solution) rises. This regenerates the absorption liquid (KOH). By regeneration of the absorption liquid, the liquid in the cathode liquid flow path 239 becomes the first electrolyte solution (KOH-KCL solution) including the absorption liquid and the electrolyte solution. The first electrolyte solution (KOH-KCL solution) is cyclically supplied to the absorption tower 10 via the fourth discharge port 238 and the ninth passage 609.

Protons (H⁺) supplied to the intermediate layer 28 are adsorbed by the catalyst layer 281 on the anode 22 side, and then supplied to the gas diffusion layer 282 as hydrogen molecules. The hydrogen molecules pass through the inside of the gas diffusion layer 282 and are converted into protons (H⁺) at the catalyst layer 281 on the cathode 24 side. The protons (H⁺) are supplied to the anode liquid chamber 231 of the adjacent electrolyte unit 23.

By similar reactions being performed in each electrolyte unit 23, protons (H⁺) move from the anode 22 side toward the cathode 24 side and are supplied to the cathode 24.

The protons (H⁺) supplied to the cathode 24 are adsorbed by the cathode catalyst layer 241. As represented by the following reaction formula (4), hydrogen molecules are generated again through a reduction reaction in the cathode catalyst layer 241.

2H⁺ + 2e⁻ → H₂ ... (4)

The hydrogen gas generated by the cathode 24 may be hydrogen gas generated by a reduction reaction of water, as represented by the following reaction formula (5). Hydrogen gas can be generated by water contained in the first electrolyte solution or the second electrolyte solution being reduced in the cathode catalyst layer 241.

2H₂O + 2e⁻ → H₂ + 2OH⁻ ... (5)

The hydrogen gas generated by the cathode 24 can have a higher pressure than the hydrogen-containing gas supplied to the anode 22. The hydrogen gas generated by the cathode 24 is a gas containing hydrogen and water, and hydrogen gas comprising a hydrogen concentration of not less than 99 vol% can be obtained by removing moisture. The hydrogen gas generated by the cathode 24 is discharged from the second discharge port 253 and stored in the hydrogen storage unit 50 in a state where moisture has been removed. Alternatively, the hydrogen gas generated by the cathode 24 may be stored in the hydrogen storage unit 50 while containing moisture.

In the electrolytic reduction apparatus 2, a mixed gas containing hydrogen and a carbon compound derived from the concentrated carbon dioxide gas is generated by electrolyzing the concentrated carbon dioxide gas together with water.

The mixed gas is supplied to the concentration and separation unit 20 via the fifth passage 605, the merging unit 70, and the fourth passage 604. In the concentration and separation unit 20, the carbon compound is separated from hydrogen, and an exhaust gas containing the carbon compound is discharged.

In the carbon compound production system S, normally, the total amount of the mixed gas generated in the electrolytic reduction apparatus 2 is supplied to the concentration and separation apparatus 1 as the hydrogen-containing gas. The flow rate of the mixed gas may be appropriately adjusted by the control valve 95b. When the flow rate of the mixed gas discharged from the electrolytic reduction apparatus 2 or the generation amount of the mixed gas in the electrolytic reduction apparatus 2 is less than a predetermined value, the amount of hydrogen in the hydrogen-containing gas is increased by adding high-pressure hydrogen gas to the hydrogen-containing gas. The ratio between the mixed gas and the high-pressure hydrogen gas contained in the hydrogen-containing gas can be set based on the hydrogen concentrations of the mixed gas and the high-pressure hydrogen gas, and the flow rate of the mixed gas. At the time of starting operation, the hydrogen-containing gas containing only the high-pressure hydrogen gas may be supplied to the concentration and separation apparatus 1.

In the carbon compound production system S, flow routes of the first electrolyte solution and the second electrolyte solution can be switched based on the pH value of the liquid flowing through the cathode liquid chamber 233. The pH value of the liquid may be, for example, the pH of the second electrolyte solution supplied to the cathode liquid chamber 233, or the pH of the first electrolyte solution or the like discharged from the cathode liquid chamber 233. When the pH value is less than a predetermined value, it is considered that the reaction in which the chemical equilibrium of the reaction formula (3) in the anode liquid chamber 231 moves to the right has not sufficiently progressed.

When the pH value is not less than the predetermined value, the second electrolyte solution discharged from the third discharge port 235 of the anode liquid chamber 231 is supplied to the cathode liquid chamber 233 via the seventh passage 607, the gas-liquid separation unit 40, and the eighth passage 608. When the pH value is not less than the predetermined value, the first electrolyte solution discharged from the fourth discharge port 238 of the cathode liquid chamber 233 is supplied to the absorption tower 10 via the ninth passage 609, so that the first electrolyte solution absorbs carbon dioxide again.

When the pH value is less than the predetermined value, the second electrolyte solution discharged from the third discharge port 235 of the anode liquid chamber 231 is resupplied to the anode liquid chamber 231 as the first electrolyte solution via the first bypass passage 612 and the second passage 602. When the pH value is less than the predetermined value, the first electrolyte solution discharged from the fourth discharge port 238 of the cathode liquid chamber 233 may be resupplied to the cathode liquid chamber 233 as the second electrolyte solution via a second bypass passage, which is not illustrated, and the eighth passage 608 in order to make the pH value not less than the predetermined value.

The content of control processing executed by the control device 3 will be described. The control device 3 manages the operating status of the carbon compound production system S, based on measured values of the current sensor 91, the liquid sensor 92, and the flowmeter 96. The control device 3 estimates, for example, the amount of hydrogen consumed in the concentration and separation unit 20, the amount of carbon dioxide produced in the concentration and separation unit 20, the amount of mixed gas produced in the electrolytic reduction apparatus 2, and the like, based on a current value of a DC power supply for energizing the concentration and separation unit 20 detected by the current sensor 91 and an amount of electricity obtained by integrating the current values.

The control device 3 may automatically control the driving of the compressor 93, the pump 94, and the control valve 95 based on the estimation results. Examples of automatic control content are illustrated below.

The control device 3 adjusts the content and the supply amount of the hydrogen-containing gas supplied to the concentration and separation unit 20, based on the flow rate of the mixed gas discharged from the electrolytic reduction apparatus 2 or the generation amount of the mixed gas in the electrolytic reduction apparatus 2. The content and the supply amount of the hydrogen-containing gas may be adjusted by controlling the opening degrees of the control valves 95b and 95c. The content of the hydrogen-containing gas may be a mixing ratio between the mixed gas and the hydrogen gas. When the flow rate of the mixed gas discharged from the electrolytic reduction apparatus 2 is less than a predetermined flow rate value, the control device 3 adds high-pressure hydrogen gas from the hydrogen storage unit 50 in response to a shortage of the flow rate of the mixed gas.

The control device 3 switches the flow route of the first electrolyte solution discharged from the cathode liquid chamber 233 and the flow route of the second electrolyte solution discharged from the anode liquid chamber 231, based on the pH value of the liquid flowing through the cathode liquid chamber 233. When the pH value is not less than the predetermined value, the control device 3 causes the second electrolyte solution discharged from the anode liquid chamber 231 to be supplied to the cathode liquid chamber 233 without flowing into the first bypass passage 612. The control device 3 also causes the first electrolyte solution discharged from the cathode liquid chamber 233 to be supplied to the absorption tower 10. When the pH value is less than the predetermined value, the control device 3 causes the second electrolyte solution discharged from the anode liquid chamber 231 to flow through the first bypass passage 612 and be supplied to the anode liquid chamber 231. The control device 3 also causes the first electrolyte solution discharged from the cathode liquid chamber 233 to flow through the second bypass passage, which is not illustrated, and be supplied to the cathode liquid chamber 233.

In the above, the configuration uses the mixed gas as the hydrogen source. Alternatively, hydrogen gas from a hydrogen source other than the mixed gas may be supplied to the concentration and separation unit 20.

In the above, the electrolyte units 23 are stacked using the intermediate layer 28 including the gas diffusion layer 282 supporting the catalyst layers 281 on both surfaces. The intermediate layer 28 may be any layer as long as it can supply protons from the cathode liquid chamber 233 to the anode liquid chamber 231. The intermediate layer 28 may be, for example, a bipolar membrane formed by bonding a cation exchange membrane and an anion exchange membrane. The intermediate layer 28 using a gas diffusion layer and the intermediate layer 28 using a bipolar membrane may be used in combination. The number of electrolyte units 23 disposed in the concentration and separation unit 20 is not limited to a plurality, and may be one.

According to the above configuration, the concentration and separation unit 20 can produce concentrated carbon dioxide gas using an electrodialysis method by hydrogen pumping in which a hydrogen-containing gas containing hydrogen at a low concentration is used. For example, the voltage applied to the concentration and separation unit 20 can be made lower than that in a method using water electrolysis, and energy consumption can be reduced. Since a gas containing hydrogen at a low concentration is used as the hydrogen source, the degree of freedom in selecting the hydrogen source increases, and the degree of freedom in system design increases.

Further, according to the above configuration, since the intermediate layer 83 is provided, the voltage required for permeation of protons between a plurality of electrolyte units can be reduced as compared with a case where a bipolar membrane is used. This is because, when a bipolar membrane is used, application of a voltage at least sufficient to dissociate water is required, whereas by using the intermediate layer 83, such application of voltage becomes unnecessary. Specifically, the voltage required in the intermediate layer 83 is the sum of voltages required for the reaction in which protons become hydrogen molecules and the reaction in which hydrogen molecules become protons, and this total voltage is significantly smaller than the voltage for dissociating water.

Since the hydrogen gas obtained by the concentration and separation unit 20 or the mixed gas derived from the concentrated carbon dioxide gas can be used as a hydrogen raw material, the gas can be efficiently cycled within the system. Since the concentration and separation unit 20 produces carbon dioxide and separates hydrogen from a post-reduction product, there is no need to separately provide a hydrogen separation step, thereby improving the operating efficiency and further reducing energy consumption. There is no longer a need to separately provide a carbon dioxide production apparatus and a separation apparatus, which simplifies the system configuration.

By cyclically using a mixed solution of the absorption liquid and the electrolyte solution, the amount of energy required for absorbing and releasing carbon dioxide can be reduced, and the operating efficiency can be improved. By stacking the electrolyte units 23 using the intermediate layer 28 including the gas diffusion layer 282 supporting the catalyst layers 281 on both surfaces, the voltage required for permeation of hydrogen ions between the electrolyte units 23 can be reduced compared to, for example, a case where a bipolar membrane is used. This is because, when a bipolar membrane is used, application of a voltage at least sufficient to dissociate water molecules into protons (H⁺) and hydroxyl ions (OH⁻) is required, but by using the intermediate layer 28, such application of voltage becomes unnecessary. Specifically, the voltage required in the intermediate layer 28 is the sum of voltages required for the reaction in which protons become hydrogen molecules and the reaction in which hydrogen molecules become protons, and this total voltage is significantly smaller than the voltage for dissociating water. Note that the theoretical voltage for dissociating water molecules into protons (H⁺) and hydroxyl ions (OH⁻) in a bipolar membrane is approximately 0.83 V, and the theoretical voltages for the reaction in which protons become hydrogen molecules and the reaction in which hydrogen molecules become protons in the intermediate layer 28 are 0 V. That is, by stacking a plurality of liquid chambers using the intermediate layer 28, the voltage applied to the concentration and separation unit 20 can be further lowered compared to a case where similar stacking is performed using a bipolar membrane, and energy consumption can be reduced.

The embodiment disclosed herein is illustrative in all respects and it is ought to be understood not restrictive. The technical features described in the examples can be combined with each other, and the scope of the present invention is intended to include all modifications within the scope of the claims and a scope equivalent to the scope of the claims. The sequence illustrated in each embodiment is not limited, and each processing procedure may be executed with the order thereof changed as long as there is no inconsistency, or a plurality of processes may be executed in parallel. The processing subject of each processing is not limited, and the processing of each device may be executed by an other device as long as there is no inconsistency.

The matters described in the embodiments can be combined with each other. Furthermore, the independent claims and the dependent claims recited in the claims can be combined with each other in all possible combinations, regardless of the citation form. Furthermore, a form in which a claim cites two or more other claims (multi-claim form) is used in the scope of the claims, but the present invention is not limited thereto. The present invention may be described using a format in which a multi-claim (multi-multi-claim) citing at least one multi-claim is recited.

### DESCRIPTION OF REFERENCE NUMERALS

S Carbon compound production system
1 Concentration and separation apparatus
2 Electrolytic reduction apparatus
3 Control device
10 Absorption tower
20 Concentration unit
21 Anode plate
211 Anode gas chamber
212 Anode gas flow path
213 First supply port
214 First discharge port
22 Anode
221 Anode catalyst layer
222 Anode gas diffusion layer
23 Electrolyte unit
231 Anode liquid chamber
232 Electrolyte membrane
233 Cathode liquid chamber
24 Cathode
241 Cathode catalyst layer
242 Cathode gas diffusion layer
25 Cathode plate
251 Cathode gas chamber
252 Cathode gas flow path
253 Second discharge port
26 Power supply
28 Intermediate layer
281 Catalyst layer
282 Gas diffusion layer
283 Sixth discharge port
284 Valve
30 Recovery unit
40 Gas-liquid separator
50 Hydrogen storage unit
70 Merging unit

## Claims

1. A carbon dioxide production apparatus comprising:
an electrolyte membrane;
an anode disposed on one side of the electrolyte membrane, the anode configured to generate protons from hydrogen;
a cathode disposed on an other side of the electrolyte membrane and configured to generate hydrogen;
a first liquid chamber disposed between the anode and the electrolyte membrane and configured to be supplied with a first electrolyte solution having absorbed carbon dioxide; and
a second liquid chamber disposed between the electrolyte membrane and the cathode and configured to be supplied with a second electrolyte solution,
wherein the anode is configured to be supplied with a gas comprising a hydrogen concentration of less than 99 vol%.

2. A carbon dioxide production apparatus comprising:
an anode configured to generate protons from hydrogen;
a cathode configured to generate hydrogen;
a first liquid chamber configured to be supplied with a first electrolyte solution having absorbed carbon dioxide;
a second liquid chamber configured to be supplied with a second electrolyte solution; and
an electrolyte membrane disposed between the first liquid chamber and the second liquid chamber,
wherein the anode is configured to be supplied with a gas comprising a hydrogen concentration of less than 99 vol%.

3. The carbon dioxide production apparatus according to claim 1 or 2,
wherein the gas supplied to the anode has a hydrogen concentration of not more than 50 vol%.

4. The carbon dioxide production apparatus according to claim 1 or 2,
wherein the gas supplied to the anode includes a mixed gas containing hydrogen and a carbon compound, the mixed gas being obtained by reducing carbon dioxide produced by a carbon dioxide production apparatus.

5. The carbon dioxide production apparatus according to claim 1 or 2,
wherein the gas supplied to the anode is mixed with a gas comprising a hydrogen concentration of not less than 99 vol%.

6. The carbon dioxide production apparatus according to claim 5,
wherein the gas comprising a hydrogen concentration of not less than 99 vol% includes hydrogen generated by the cathode.

7. The carbon dioxide production apparatus according to claim 1 or 2, comprising
a merging unit configured to merge a gas comprising a hydrogen concentration of less than 99 vol% with a gas comprising a hydrogen concentration of not less than 99 vol% and supply the gases to the anode.

8. The carbon dioxide production apparatus according to claim 1 or 2, comprising
a gas-liquid separator configured to separate carbon dioxide released from the first electrolyte solution and the first electrolyte solution from each other.

9. The carbon dioxide production apparatus according to claim 8,
wherein the first electrolyte solution separated by the gas-liquid separator is supplied to the second liquid chamber as the second electrolyte solution.

10. The carbon dioxide production apparatus according to claim 1 or 2, comprising
a first gas chamber configured to allow gas supplied to the anode to flow therethrough,
and the first gas chamber includes a discharge port configured to discharge a part of the gas supplied to the anode.

11. The carbon dioxide production apparatus according to claim 10, comprising
a recovery unit configured to recover the gas discharged from the discharge port.

12. The carbon dioxide production apparatus according to claim 1 or 2, comprising
a gas-liquid contact section configured to bring a gas containing carbon dioxide into contact with a liquid,
wherein the first liquid chamber is configured to be supplied with the first electrolyte solution having absorbed carbon dioxide by bringing the gas containing carbon dioxide into contact with the liquid in the gas-liquid contact section.

13. The carbon dioxide production apparatus according to claim 1 or 2, comprising
a plurality of units between the anode and the cathode, each unit having: the electrolyte membrane; and the first liquid chamber and the second liquid chamber disposed with the electrolyte membrane interposed therebetween,
wherein the plurality of first liquid chambers are each connected to a gas-liquid separator configured to separate carbon dioxide released from the first electrolyte solution and the first electrolyte solution from each other, and to a supply path configured to supply the first electrolyte solution.

14. The carbon dioxide production apparatus according to claim 1 or 2, comprising:
a first gas chamber configured to allow the gas supplied to the anode to flow therethrough; and a second gas chamber configured to hydrogen generated by the cathode to flow therethrough,
wherein a flow rate of gas per unit time in the first gas chamber is larger than a flow rate of gas per unit time in the second gas chamber.

15. A carbon dioxide production apparatus comprising:
an electrolyte membrane;
an anode disposed on one side of the electrolyte membrane and configured to generate protons from hydrogen;
a cathode disposed on an other side of the electrolyte membrane and configured to generate hydrogen;
a first liquid chamber disposed between the anode and the electrolyte membrane and configured to be supplied with a first electrolyte solution having absorbed carbon dioxide; and
a second liquid chamber disposed between the electrolyte membrane and the cathode and configured to be supplied with a second electrolyte solution,
wherein the anode is configured to be supplied with a mixed gas containing hydrogen and a carbon compound.

16. A carbon compound production system comprising:
the carbon dioxide production apparatus according to claim 1 or 2; and a reduction apparatus configured to reduce carbon dioxide produced by the carbon dioxide production apparatus to produce a carbon compound.

17. The carbon compound production system according to claim 16,
wherein the reduction apparatus is an electrolytic reduction apparatus.

18. The carbon compound production system according to claim 16,
wherein the reduction apparatus is configured to produce a mixed gas containing the carbon compound and hydrogen, and supply the mixed gas produced by the reduction apparatus to the anode.
